# EUROPEAN PATENT SPECIFICATION

(11) **EP 4 360 108 B1**
(45) Date of publication and mention of the grant of the patent: **18.06.2025**
(21) Application number: 22818123.6
(22) Date of filing: 02.12.2022
(51) Int. Cl.: G21C 9/033, G21C 11/06, G21C 9/02

(54) **NUCLEAR REACTOR PROVIDED WITH A PROTECTION SYSTEM CHARACTERIZED BY MULTIPLE ACTUATION PHENOMENA**
KERNREAKTOR MIT EINEM DURCH MEHRERE BETÄTIGUNGSPHÄNOMENE GEKENNZEICHNETEN SCHUTZSYSTEM
RÉACTEUR NUCLÉAIRE DOTÉ D'UN SYSTÈME DE PROTECTION CARACTÉRISÉ PAR DE MULTIPLES PHÉNOMÈNES D'ACTIONNEMENT

(30) Priority: 06.12.2021 IT 202100030758
(43) Date of publication of application: 01.05.2024
(73) Proprietor: NEWCLEO SA, 75001 Paris (FR)
(72) Inventor: CINOTTI, Luciano, 10129 Torino (IT)
(74) Representative: Studio Torta S.p.A.
(86) International application number: PCT/IB2022/061692
(87) International publication number: WO 2023/105366

(56) References cited:
- JP-A- 2017 187 361
- US-A1- 2018 174 693
- US-A1- 2021 142 919

## Description

### TECHNICAL FIELD

The present invention relates to a nuclear reactor, in particular a liquid metal cooled nuclear reactor, provided with a protection system for shutdown of the reactor in accidental conditions, comprising one or more shutdown devices characterized in that their actuation is determined by a range of accidental phenomena.

### BACKGROUND

A nuclear reactor is normally provided with at least two independent shutdown systems. The most common shutdown system consists of rods designed to insert absorbent material inside the core. In the case of a fast reactor it is also possible to control the power by moving absorbent material towards or away from the periphery of the core. It is also possible to shut down the reactor by increasing neutron leakage. The patent JP2017187361A describes a shutdown system based on the use of gas expansion modules (GEM) consisting of a hollow tubular structure closed at the top and open at the bottom, containing primary coolant in the area facing the core and with a gas cover at the top. When the circulation pumps are shut down, the pressure reduction of the primary coolant contained in the GEM allows expansion of the gas contained in the upper part with consequent lowering of the level of primary fluid contained inside the GEM, increase of neutron leakage and shutdown of the reactor.

This solution is not without drawbacks as it takes place only by shutting down the circulation pumps and is not suitable for all reactor layouts, as not all known reactor layouts obtain an appreciable pressure reduction at the core inlet when the pumps are shut down. Moreover, the known solution causes a dangerous increase in the reactivity of the reactor in case of subsequent untimely start-up of the pumps and does not protect against fundamental accidental sequences such as those that lead to an increase in the temperature of the core and of the primary coolant. It is instead important to ensure shutdown of the reactor in the very case of increase of said temperature and for some types of plant it is also necessary to protect the primary system from violent overpressures such as those generated by breakage of a tube of the steam generator.

### SUMMARY

An object of the following invention is to provide solutions that produce shutdown of the reactor for a range of accidental phenomena, including those that lead to a temperature increase of the reactor. For reactors with steam generator inside the tank of the reactor and operating at secondary side pressure higher than the primary side pressure, it is particularly important to provide the reactor with passive protection in case of pressurization accidents of the reactor. To the best of the inventor's knowledge, to date no passive protection has been published for this type of accident.

Therefore, the present invention relates to a nuclear reactor, as defined in the appended claim 1 and, for its auxiliary features and plant configurations, in the dependent claims.

In brief, the present invention relates to a nuclear reactor, in particular a fast nuclear reactor, preferably cooled with heavy liquid metal or molten salts, in which the core is surrounded by shutdown devices. The shutdown devices have a substantially vertical height and have an upper volume and a lower volume separated by a septum. The upper volume contains an operating fluid in the part thereof facing the active part of the core, in particular the same primary fluid of the reactor, with neutron reflecting function to facilitate reaching the critical mass of the reactor. The lower volume contains a neutron transparent medium (for example gas) or even a neutron absorbing medium (for example boron carbide balls immersed in the primary fluid). Replacement in the upper volume of the neutron reflecting operating fluid with a neutron transparent or absorbing medium reduces the reactivity of the reactor and causes its shutdown. This can take place both by transfer of operating fluid from the upper volume to the lower volume by at least one siphon passing through the septum, so as to drain the portion facing the core of the upper volume of operating fluid and replace it with the neutron transparent or absorbing medium previously floating above the operating fluid; and by fusion or breakage of the septum when a preset temperature or pressure threshold is exceeded, to allow neutron transparent or absorbing material to flow upward and float in the upper volume.

Transfer of the operating fluid from the upper volume to the lower volume can take place by fusion of a fusible portion of the septum or through at least one siphon for pressurization of the upper volume by active injection of gas at a higher pressure, but also passively, through an increase in the temperature of the same gas following a temperature increase of the primary fluid of the reactor, or through reduction of an inner volume of the upper volume defined inside an elastic deformable body, which collapses following a pressure increase of an outer volume of the upper volume in communication with the primary fluid.

In a particular construction configuration of the outer volume of the upper volume that surrounds the collapsible elastic body, this outer volume instead contains gas in normal operation of the reactor, but can be flooded through overflowing of primary fluid following seismic waves, leading to collapse of the inner volume (inside the elastic deformable body) by effect of buoyancy on the primary fluid and consequent shutdown of the reactor.

### BRIEF DESCRIPTION OF THE DRAWINGS

The invention is further described in the following non-limiting examples of embodiment, with reference to the figures of the accompanying drawings, wherein:
- Fig. 1 is an overall schematic longitudinal sectional view of a nuclear reactor provided with a protection system in accordance with the invention;
- Fig. 2 is an overall schematic longitudinal sectional and enlarged view of only the protection system according to a first embodiment of the invention;
- Fig. 3 is an enlarged schematic view of a portion of the section of Fig. 2;
- Fig. 4 is an overall schematic longitudinal sectional view that shows another example of the protection system of the invention;
- Figs. 4A and 4B are sectional views along the planes A-A and B-B of Fig. 4 respectively;
- Fig. 5 is an overall schematic longitudinal sectional view showing another example of the protection system of the invention;
- Fig. 6 is an overall schematic longitudinal sectional view showing another example of the protection system of the invention;
- Fig. 7 is an overall schematic longitudinal sectional view showing a further example of the protection system of the invention.

### DESCRIPTION OF EMBODIMENTS

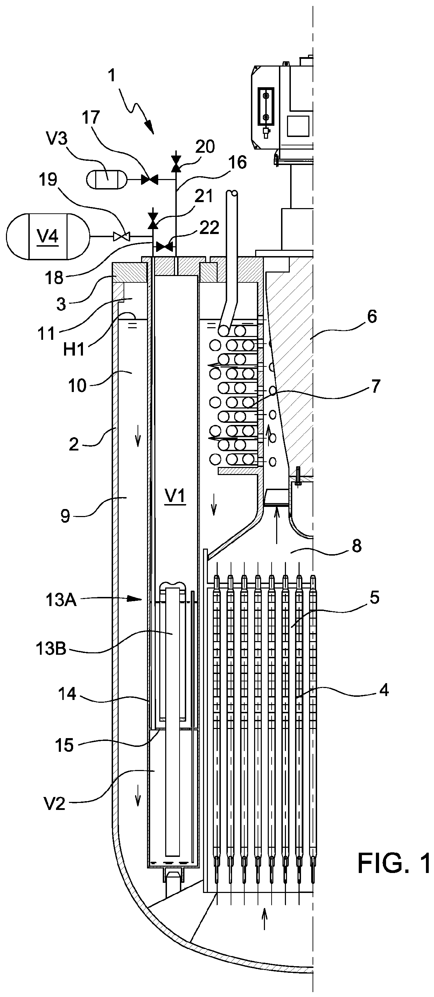

With reference to Fig. 1, representative of a nuclear reactor 1 in particular cooled with liquid metal or molten salts, the nuclear reactor 1 comprises a tank 2 substantially bowl or pool shaped and a closing structure 3. It is understood that the invention can be applied to reactors of other type and/or operating with another primary fluid.

The tank 2 contains a core 4 with an active part 5 thereof, at least one circulation pump 6, at least one heat exchanger 7, in particular a steam generator, a hot collector 8 and a cold collector 9 in which a primary fluid 10 for cooling the core 4 circulates and which fills it to the level H1, leaving a free space 11 containing a cover gas 12 at the top.

The reactor is provided with a protection system 13A for shutdown of the reactor in accidental conditions. In particular, the protection system comprises one or more shutdown devices 13B arranged laterally and radially outside with respect to the core 4; preferably, the protection system 13A comprises a plurality of shutdown devices 13B (only one of which is shown in Fig. 1 and in the subsequent figures) arranged around the core 4 and radially outside with respect to the core 4.

Each shutdown device 13B of the protection system 13A has a casing 14 arranged laterally and radially outside with respect to the core 4 and facing the core 4 and which is fixed to the closing structure 3.

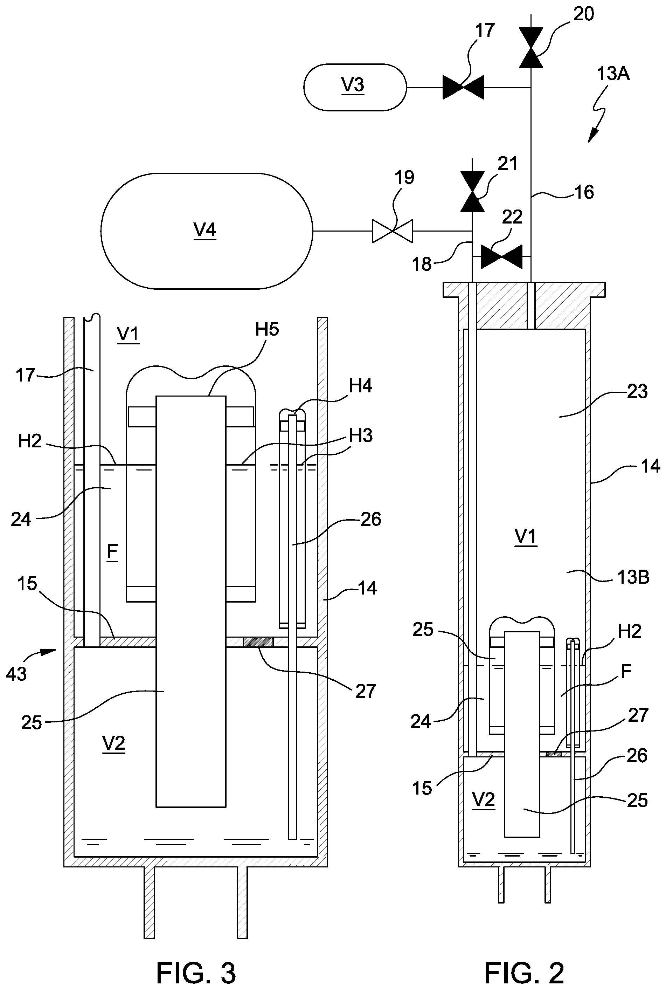

With reference to Figs. 1, 2 and 3, the shutdown device 13B comprises a casing 14, for example (but not necessarily) substantially cylindrical, which is provided with a septum 15 that delimits inside the casing 14 an upper volume V1 and a lower volume V2. The volume V1 is also connected to the high pressure volume V3 by a duct 16 and a gas inlet valve 17, and the volume V2 is connected by a duct 18 and a valve 19 to the service volume V4. The ducts 16 and 18 are also provided with respective service valves 20, 21 and a connection valve 22 arranged between the ducts 16, 18. The volumes V3 and V4 contain gas, the volume V2 normally contains gas, the volume V1 normally contains gas in its upper part 23 and contains in its lower part 24, up to a level H2, an operating fluid F, preferably a heavy liquid metal, for example of the same type of the primary fluid 10.

The septum 15 is arranged at the lower limit of the active part 5 of the core 4, i.e., at the level of a lower end of the active part 5 of the core 4. The operating fluid F is thus positioned close to the active part 5 of the core 4, while the volume V2 is positioned below the active part 5 of the core 4. The lower part 24 of the volume V1 communicates with the volume V2 through at least one siphon 25 with a greater diameter and a siphon 26 with a smaller diameter. The operating fluid F determines a second level H3 inside the siphons. The level H4 at which the siphon 26 with a smaller diameter is primed is lower than the level H5 at which the siphon 25 with a greater diameter is primed. The septum 15 contains a collapsible portion 27, in particular which can fuse, being made of a material that fuses at a preset temperature.

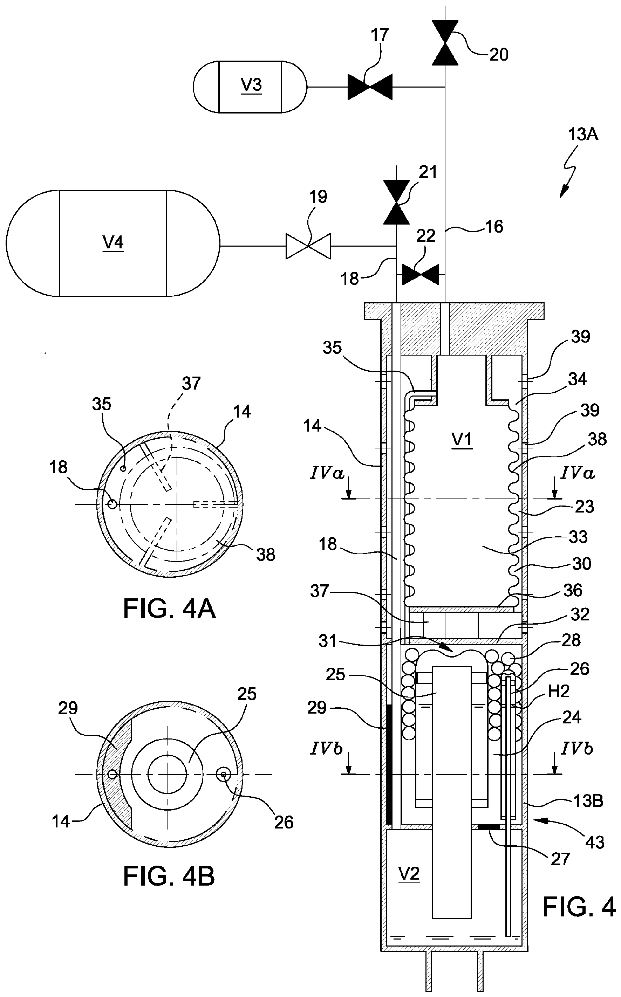

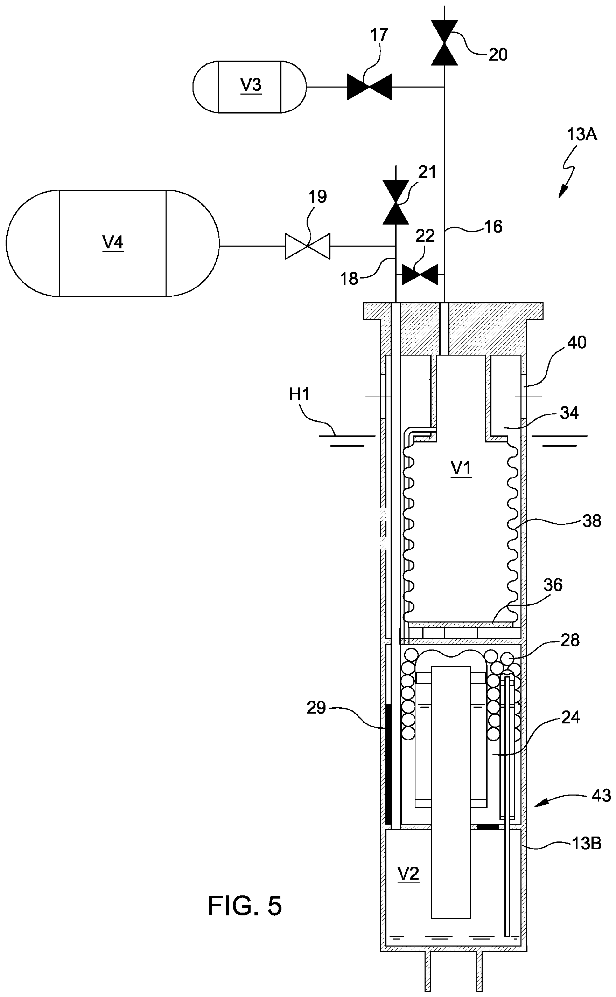

In the embodiment of Figs. 4 and 5, a first neutron absorbing material 28 having a density lower than the operating fluid F, for example in the form of boron carbide balls, is arranged and mostly floats on the surface of the operating fluid F at the level H2. Moreover, a second neutron absorbing material 29, which can again be formed of boron carbide or of another material having similar function, is positioned inside the casing 14 at the same level of the operating fluid F in the radially outermost area from the periphery of the core 4. The upper part 23 of the volume V1 is divided into an upper portion 30 and a lower portion 31 separated by a second septum 32. The upper portion 30 is in turn divided into an inner volume 33 and an outer volume 34. The inner volume 33 is closed save for the communications with the duct 16 and, via a connection duct 35, with the lower portion 31 of the volume V1. The inner volume 33 is closed below by the bottom 36, resting on supports 37 and is defined inside an elastic deformable body 38 for most of its vertical height, designed to vary its inner volume, for example substantially bellows shaped. With reference to Fig. 4, which also applies to reactors without cover gas, the outer volume 34 is in communication along the whole of its vertical height with the primary fluid 10 of the reactor via holes 39 formed in the casing 14.

In the variant of Fig. 5 the outer volume 34 contains gas and communicates in its top part with the cover gas 12 of the reactor via wide openings 40 formed in the casing 14 and positioned above the level H1 of the primary fluid 10.

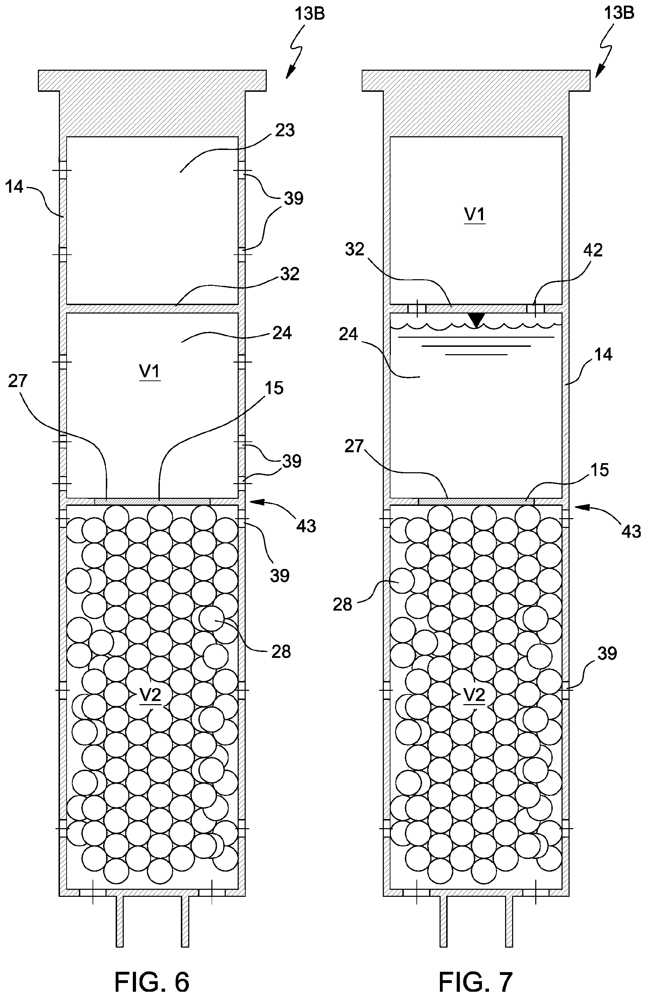

In the embodiment of Fig. 6, the volume V1 is separated from the volume V2 by the septum 15, which comprises a collapsible portion 27, in particular which can fuse, being made of a material that fuses at a preset temperature. The volume V1 and the volume V2 are both in communication with the primary fluid 10 via holes 39 of the casing 14. The volume V1 is divided into an upper part 23 and a lower part 24 thereof by a second septum 32. The volume V2 contains neutron absorbing material 28 preferably in the form of balls.

In the embodiment of Fig. 7 the volume V1 is separated from the volume V2 by the septum 15 containing a collapsible portion 27 thereof, which can fuse at a preset temperature and break at a preset pressure.

The volume V2 communicates with the primary fluid 10 via holes 39 of the casing 14. The volume V2 contains neutron absorbing material 28 of larger size than the holes 39, preferably in the form of balls. The volume V1 is closed, contains gas, optionally at a lower pressure with respect to the cover gas 12 and in its lower part 24, facing the active part 5 of the core 4, preferably contains a neutron reflecting fluid, typically the primary fluid 10. The volume V1 also contains a second septum 32, with holes 42 smaller than the size of the neutron absorbing material 28, located at a level H6 corresponding to the upper end of the active part 5 of the core 4.

With reference to Figs. 1-5, during normal operation of the reactor, the volumes V1 and V2 are substantially at the same pressure so as to maintain the levels H2 and H3 of the operating fluid F inside and outside the siphons 25 and 26 substantially at the same height. This can be achieved, for example, via temporary opening of the valve 22. The valves 17, 20 and 21 are normally closed while the valve 19 is normally open and places the volume V2 in communication with the volume V4. The volumes V3 and V4 are outside the reactor and contain cold gas; the volume V3 is at a pressure considerably higher than the volume V1.

A feature of the invention is that a plurality of plant parameters that exceed the preset limits can each independently activate the system of the invention to cause a reduction in the reactivity of the reactor.

A first shutdown mode of the reactor is possible by the operator or by the protection systems by opening the gas inlet valve 17, which in particular can be an explosive valve, so as to place the volume V3 in communication with the volume V1, causing a rapid pressure increase of the volume V1 and consequent transfer of operating fluid F from the volume V1 to the volume V2 by the siphons 25 and 26. Replacement of the operating fluid F, having neutron reflecting function, with gas in the lower part 24 of the volume V1 adjacent to the core causes the increase of neutron leakage and shutdown of the reactor. Where necessary, the introduction of negative reactivity can be amplified by the use of the first neutron absorbing material 28, which through lowering the level of operating fluid F is brought close to the core. In this case, the shutdown intervention can be very fast. The introduction of negative reactivity can also be amplified by the use of the second neutron absorbing material 29, which through lowering of the level of operating fluid F is no longer shielded by the neutron reflecting operating fluid F, thereby amplifying the neutron absorption function.

The system can be rearmed once more by opening the service valve 20, closing the valve 19, and injecting gas into the volume V2 via the service valve 21 and the duct 18, to cause the fluid F to rise from the volume V2 to the volume V1 through the siphons 25 and 26.

A second mode of intervention can take place in an entirely passive way, in case of a temperature increase of the primary fluid 10 of the cold collector 9 of the reactor which can, for example, take place as a result of the generalized loss of the power supply of the plant. In this case the temperature increase of the gas contained in the volume V1 causes a pressure increase of the same gas with lowering of the level H2 and rising of the level H3 of the operating fluid F outside and inside the siphons 25 and 26 respectively to the activation level H4 of the siphon with smaller diameter, with progressive emptying of the fluid F from the volume V1 with filling of the lower volume V2 which is hence away from the active part of the core. In this case the reactor can be shut down when the preset temperature threshold is exceeded, even without the intervention of the operator and in case of concurrent malfunction of the protection logic of the automatic safety systems of the reactor.

A third mode of intervention is determined by the temperature increase and consequent fusion of the collapsible portion 27 which, when the threshold temperature at which it fuses is exceeded, causes displacement of the operating fluid F by gravity from volume V1 to volume V2.

A fourth mode of intervention is determined by the excessive pressure increase of the primary system. The pressure increase of the primary fluid 10 of the reactor takes place, for example, in case of breakage of a tube of the heat exchanger 7 (steam generator). This pressure increase determines compression of the elastic deformable body 38, with reduction of the inner volume 33 and activation of the siphons 26 and 25 that cause shutdown of the reactor according to modes already described.

Also in the case in which the outer volume 34 (Fig. 5) only communicates with the cover gas 12, its pressure increase produces an effect analogous to that of the configuration of Fig. 4.

The intervention of the siphon 25 with greater diameter is a function of the rapidity of the pressure increase of the cover gas 12 of the reactor.

A fifth mode of intervention is determined by the earthquake in the configuration of Fig. 5. The earthquake causes waves on the level H1 of the fluid F, which if intense can cause overflowing of the primary fluid 10 inside the outer volume 34 through the wide openings 40, causing a reduction of the inner volume 33 by effect of buoyancy thereof with deformation of the body 38.

In the diagram of Fig. 6 in which the neutron absorbing material is positioned below the septum 15, it is the buoyancy of the primary fluid 10 that, when the fusion temperature of the septum 15 is exceeded, brings the neutron absorbing material 28 inside the lower part 24 in front of the active part 5 of the core 4.

In the diagram of Fig. 7 in which the neutron absorbing material is again positioned under the septum 15, it is once again the buoyancy of the primary fluid 10 that, when the fusion temperature of the portion 27 of the septum 15 is exceeded, or when the pressure loads of the same portion 27 are exceeded, brings the neutron absorbing material 28 inside the lower part 24 in front of the active part 5 of the core 4. The second septum 32 allows leakage of the primary fluid 10 to reduce the overpressure of the primary fluid 10, but forms a barrier for the neutron absorbing material 28 which must be positioned in front of the active part 5 of the core 4.

In all cases, the shutdown devices 13B have an upper volume V1 and a lower volume V2 separated by a septum 15. The upper volume V1 contains the operating fluid F in its part facing the active part 5 of the core 4, in particular the same primary fluid 10, with neutron reflecting function to facilitate reaching the critical mass of the reactor. The volume V2 instead contains a neutron transparent medium (for example a gas) or, according to the configuration of the shutdown device 13B, a neutron absorbing medium (for example boron carbide balls immersed in the primary fluid). The protection system 13A is configured so as to activate replacement of the neutron reflecting operating fluid F with the neutron transparent or absorbing medium in the upper volume V1, thereby reducing the reactivity of the reactor and causing its shutdown. This can take place both through transfer of operating fluid F from the volume V1 to the volume V2 through one or more siphons 25, 26 passing through the septum 15 to drain operating fluid F from the portion of the volume V1 facing the core and replace it with the neutron transparent or absorbing medium previously floating above the operating fluid F, and through fusion or breakage of the septum 15 to allow the neutron transparent or absorbing material in the lower part 24 of the volume V1 to flow upward and float.

Transfer of the operating fluid F from the volume V1 to the volume V2 can take place by fusion of the portion 27 of the septum 15 or through the siphons 25, 26 by pressurization of the volume V1 through active injection of gas at a higher pressure, but also passively through the temperature increase of the same gas following a temperature increase of the primary fluid of the reactor or through reduction of the volume V1 by collapsing an upper part thereof following the pressure increase of the outer volume 34 in communication with the primary system of the reactor.

The particular construction configuration (Fig. 5) of the outer volume 34 normally containing gas, but floodable by overflowing of primary fluid 10 following seismic waves, can cause a collapse of the inner volume 33 by effect of buoyancy on the primary fluid 10 and consequent shutdown of the reactor.

Therefore, in accordance with the invention, the septum 15 inside each casing 14 is associated with at least one exclusion device 43, defined in this case by the siphons 25, 26 and/or by the collapsible portion 27, configured so as to exclude the separation function of the septum 15 to replace, at least in part, the neutron reflecting operating fluid F with the neutron transparent or neutron absorbing medium inside the casing 14 in front of the active part 5 of the core 4.

The advantages of the present invention are evident from the description above:
- shutdown of the reactor through the device described can take place in an entirely passive manner and, according to its embodiments, also through a command executed by the operator or by the protection logic to deal with different accidental sequences;
- one or more plant parameters that exceed the preset limits can, according to its embodiments, activate the system;

- the system can be rearmed according to its embodiments, but only with intervention of the operator and not by returning within the design limits of the parameter that actuated it;
- the system is positioned on the periphery of the core and therefore does not influence its mechanical design;
- actuation by the operator, by the protection logic or by the temperature increase of the reactor does not require the operation of mechanical members inside the tank of the reactor;
- actuation due to pressure increase of the reactor or to a seismic movement thereof is simply the result of an elastic or plastic deformation or of a preset breakage of a component;
- the reduction of the inner volume 33 of Figs. 4 and 5 following a pressure increase of the primary fluid contributes to reduce the pressure transient, a particularly useful effect in case of a plant layout solution without cover gas 12 being adopted;
- filling of the volume V1 with primary fluid 10 according to Fig. 7 following a pressure increase of the primary fluid contributes to reduce the pressure transient, a particularly useful effect in case of a plant layout solution without cover gas 12 being adopted.

It is clear that the various configurations described can be combined together, just as they can be used separately from one another, also with functions other than shutdown of the reactor. In particular, it must be noted that the solutions in which the system is activated following a pressure increase of the primary fluid can also be used autonomously with respect to the function of shutting down the reactor, with the function of reducing the pressure transient of the primary fluid (especially when a cover gas is not provided above the primary fluid).

Finally, it is understood that further modifications and variants may be made to the reactor described and illustrated herein without departing from the scope of the appended claims.

## Claims

1. A nuclear reactor (1) provided with a protection system (13A) for shutdown of the reactor in accidental conditions, the protection system (13A) comprising one or more shutdown devices (13B) arranged laterally and radially outside with respect to the core (4) of the reactor (1); the shutdown device (13B) having a casing (14), for example substantially cylindrical, positioned laterally with respect to the core (4) and at least partly facing the core (4), the casing (14) having a septum (15) that delimits inside the casing (14) an upper volume (V1) and a lower volume (V2) separated by the septum (15), the upper volume (V1) containing a neutron reflecting operating fluid (F), in particular a liquid metal, in front of the active part (5) of the core (4) and the lower volume (V2) containing a neutron transparent or neutron absorbing medium; wherein the shutdown device (13B) comprises at least one exclusion device (43) configured so as to exclude the separation function of the septum (15) to replace, at least in part, the neutron reflecting operating fluid (F) with the neutron transparent or neutron absorbing medium inside the casing (14) in front of the active part (5) of the core (4).

2. A reactor according to claim 1, wherein the upper volume (V1) comprises a lower part (24) facing the active part (5) of the core (4) and which is hydraulically connected to the lower volume (V2) by at least one siphon (25, 26) passing through the septum (15), preferably at least a siphon (25) with a greater diameter and a siphon (26) with a smaller diameter, and such that a pressure increase of the operating fluid (F) in the upper volume (V1) causes a rise in level of the operating fluid (F) inside the siphon or siphons (25, 26) up to one or more overflow levels (H4, H5) to activate the respective siphons and bring the operating fluid (F) from the lower part (24), facing the core, of the upper volume (V1) to the lower volume (V2) away from the core so as to increase neutron leakage and to cause reactor shutdown.

3. A reactor according to claim 2, wherein the lower volume (V2) is hydraulically connected to a service volume (V4) outside the core so as to limit the pressure increase in the lower volume (V2) during filling with the operating fluid (F).

4. A reactor according to claim 2 or 3, wherein a first neutron absorbing material (28) having a density lower than the operating fluid (F), for example consisting of boron carbide balls, floats in the upper volume (V1) above the operating fluid (F) so as to bring said first neutron absorbing material close to the core when the level (H2) of the operating fluid (F) in the upper volume (V1) lowers.

5. A reactor according to one or more of claims 2 to 4, wherein a second neutron absorbing material (29) is positioned inside the upper volume (V1) at the same level of the operating fluid (F) and facing the operating fluid (F) and in a radially outermost area with respect to the core, so that a lowering of the level of the operating fluid (F) in the upper volume (V1) amplifies the function of said second neutron absorbing material (29) as a result of the lack of neutron reflecting fluid interposed with respect to the core.

6. A reactor according to one or more of claims 2 to 5, wherein the upper volume (V1) is hydraulically connected to a high pressure volume (V3), containing a gas at a pressure higher than the upper volume (V1), by a duct (16) provided with a gas inlet valve (17); and wherein the opening of the gas inlet valve (17) connects the high pressure volume (V3) with the upper volume (V1) so as to cause pressurization of the upper volume (V1) and actuation of the siphons causing transfer of operating fluid (F) from the upper volume (V1) to the lower volume (V2) through the septum (15) with consequent shutdown of the reactor.

7. A reactor according to one or more of claims 2 to 6, wherein the protection system (13A) is configured so that a temperature increase of the primary fluid of the reactor and the consequent pressurization of the gas contained inside the volume (V1), with respect to the lower volume (V2) having a pressurization limited by the service volume (V4), activates one or more siphons (25, 26) with consequent displacement of operating fluid (F) from the upper volume (V1) to the lower volume (V2) through the septum (15) with consequent shutdown of the reactor.

8. A reactor according to claim 7, wherein the lower volume (V2) communicates with a duct (18) provided with a service valve (21) by which gas can be fed into the lower volume (V2) to rearm the protection system (13A) after intervention by causing the operating fluid (F) to rise from the lower volume (V2) to the upper volume (V1) through the siphon or siphons (25, 26).

9. A reactor according to one or more of the preceding claims, wherein the septum (15) comprises at least one collapsible portion (27) which fuses at a preset temperature; and wherein fusion of said collapsible portion (27) causes transfer of the operating fluid (F) from the upper volume (V1) to the lower volume (V2) with consequent shutdown of the reactor.

10. A reactor according to one or more of claims 6 to 9, wherein in an upper part of the upper volume (V1) there is an elastic deformable body (38), which divides the upper volume (V1) into an inner volume (33) inside said body (38) and an outer volume (34) outside said body (38); the inner volume (33) being closed and delimited below by a bottom (36) and communicating, via a connection duct (35), with a lower portion (31) of the upper volume (V1); said body (38) being contained inside the outer volume (34) which is in communication with the primary fluid (10) via holes (39) formed in the casing (14) along the whole vertical height of the outer volume (34); and wherein a pressure increase in the outer volume (34), following a pressure increase of the primary fluid, causes the body (38) to collapse with consequent reduction of the inner volume (33) and activation of the siphon or siphons (25, 26).

11. A reactor according to one or more of claims 6 to 9, wherein in the upper part of the upper volume (V1) there is an elastic deformable body (38), which divides the upper volume (V1) into an inner volume (33) inside said body (38) and an outer volume (34) outside said body (38); the inner volume (33) being closed and delimited below by a bottom (36) and communicating, via a connection duct (35), with a lower portion (31) of the upper volume (V1); said body (38) being contained inside the outer volume (34) which contains gas, in turn communicating with the cover gas (12) of the reactor (1) via openings (40) positioned in the upper part of the casing (14) above the level of the primary fluid; and wherein the openings (40) are configured so that accidental wave motion of the primary fluid, due for example to an earthquake, causes overflowing of primary fluid inside the outer volume (34) and consequent collapse of the body (38) by effect of buoyancy of the primary fluid, with consequent actuation of the siphon or siphons (25, 26).

12. A reactor according to claim 10 or 11, wherein the reduction of the inner volume (33) following a pressure increase of the primary fluid (10) and collapse of the body (38) contributes to reduce the pressure transient of the whole primary system of the reactor.

13. A reactor according to one or more of claims 6 to 12, wherein by opening a connection valve (22) between two ducts (16, 18) communicating with the upper volume (V1) and the lower volume (V2) respectively, it is possible to restore the levels (H2, H3) of the operating fluid (F) outside and inside the siphon or siphons (25, 26) respectively.

14. A reactor according to one or more of the preceding claims, wherein the neutron reflecting operating fluid (F) is the same primary fluid (10) of the reactor, with which the lower part (24) of the upper volume (V1) facing the core communicates via holes (39) formed in the casing (14).

15. A reactor according to claim 14, wherein the lower volume (V2) contains primary fluid (10), with which the lower volume (V2) communicates via further holes (39) formed in the casing (14), and also a first neutron absorbing material (28) which in case of a temperature increase exceeding a preset threshold and consequent fusion of the collapsible portion (27), which fuses above said threshold, of the septum (15), moves by floating inside the lower part (24) to shut down the reactor.

16. A reactor according to claim 1, wherein the upper volume (V1) is a closed volume and the lower volume (V2) contains primary fluid (10) with which the lower volume (V2) communicates via holes (39) formed in the casing (14) and also a first neutron absorbing material (28); the septum (15) comprising at least a collapsible portion (27) which breaks above a preset pressure threshold, so that in case of a pressure increase above said pressure threshold and breakage of the collapsible portion (27) of the septum (15), there is a transfer of primary fluid (10) inside the lower part (24) to reduce the pressure increase of the primary system of the reactor.

## Patentansprüche

1. Kernreaktor (1) versehen mit einem Schutzsystem (13A) zum Abschalten des Reaktors bei Störfällen, wobei das Schutzsystem (13A) eine oder mehrere Abschaltvorrichtungen (13B) umfasst, die seitlich und radial außerhalb in Bezug auf den Kern (4) des Reaktors (1) angeordnet sind; wobei die Abschaltvorrichtung (13B) ein beispielsweise im Wesentlichen zylindrisches Gehäuse (14) aufweist, das seitlich in Bezug auf den Kern (4) positioniert ist und dem Kern (4) zumindest teilweise zugewandt ist, wobei das Gehäuse (14) eine Scheidewand (15) aufweist, die innerhalb des Gehäuses (14) ein oberes Volumen (V1) und ein unteres Volumen (V2) begrenzt, die durch die Scheidewand (15) getrennt sind, wobei das obere Volumen (V1) ein neutronenreflektierendes Betriebsfluid (F), insbesondere ein flüssiges Metall, vor dem aktiven Teil (5) des Kerns (4) enthält und das untere Volumen (V2) ein neutronendurchlässiges oder neutronenabsorbierendes Medium enthält; wobei die Abschaltvorrichtung (13B) mindestens eine Ausschlussvorrichtung (43) umfasst, die so konfiguriert ist, dass sie die Trennfunktion der Scheidewand (15) ausschließt, um zumindest teilweise das neutronenreflektierende Betriebsfluid (F) durch das neutronendurchlässige oder neutronenabsorbierende Medium im Inneren des Gehäuses (14) vor dem aktiven Teil (5) des Kerns (4) zu ersetzen.

2. Reaktor nach Anspruch 1, wobei das obere Volumen (V1) einen unteren Teil (24) aufweist, der dem aktiven Teil (5) des Kerns (4) zugewandt ist und der mit dem unteren Volumen (V2) durch mindestens einen Siphon (25, 26), der durch die Scheidewand (15) hindurchgeht, hydraulisch verbunden ist, vorzugsweise mindestens ein Siphon (25) mit einem größeren Durchmesser und ein Siphon (26) mit einem kleineren Durchmesser, und sodass eine Druckerhöhung des Betriebsfluids (F) im oberen Volumen (V1) einen Anstieg des Pegels des Betriebsfluids (F) innerhalb des Siphons oder der Siphons (25, 26) bis zu einem oder mehreren Überlaufpegels (H4, H5) bewirkt, um die jeweiligen Siphons zu aktivieren und das Betriebsfluid (F) vom unteren, dem Kern zugewandten Teil (24) des oberen Volumens (V1) zum unteren Volumen (V2) weg vom Kern zu bringen, um so die Neutronenleckage zu erhöhen und eine Reaktorabschaltung zu bewirken.

3. Reaktor nach Anspruch 2, wobei das untere Volumen (V2) mit einem Servicevolumen (V4) außerhalb des Kerns hydraulisch verbunden ist, um die Druckerhöhung im unteren Volumen (V2) während der Befüllung mit dem Betriebsfluid (F) zu begrenzen.

4. Reaktor nach Anspruch 2 oder 3, wobei ein erstes neutronenabsorbierendes Material (28) mit einer geringeren Dichte als das Betriebsfluid (F), das beispielsweise aus Borkarbidkugeln besteht, im oberen Volumen (V1) über dem Betriebsfluid (F) schwimmt, um das erste neutronenabsorbierende Material in die Nähe des Kerns zu bringen, wenn der Pegel (H2) des Betriebsfluids (F) im oberen Volumen (V1) sinkt.

5. Reaktor nach einem oder mehreren der Ansprüche 2 bis 4, wobei ein zweites neutronenabsorbierendes Material (29) innerhalb des oberen Volumens (V1) auf demselben Pegel wie das Betriebsfluid (F) und dem Betriebsfluid (F) zugewandt und in einem radial äußersten Bereich in Bezug auf den Kern positioniert ist, so dass ein Absenken des Pegels des Betriebsfluids (F) im oberen Volumen (V1) die Funktion des zweiten neutronenabsorbierenden Materials (29) als Ergebnis des Fehlens eines neutronenreflektierenden Fluids, das in Bezug auf den Kern dazwischen angeordnet ist, verstärkt.

6. Reaktor nach einem oder mehreren der Ansprüche 2 bis 5, wobei das obere Volumen (V1) mit einem Hochdruckvolumen (V3), das ein Gas mit einem höheren Druck als das obere Volumen (V1) enthält, durch eine mit einem Gaseinlassventil (17) versehene Leitung (16) hydraulisch verbunden ist; und wobei das Öffnen des Gaseinlassventils (17) das Hochdruckvolumen (V3) mit dem oberen Volumen (V1) verbindet, um eine Druckbeaufschlagung des oberen Volumens (V1) und eine Betätigung der Siphons zu bewirken, die einen Transfer von Betriebsfluid (F) von dem oberen Volumen (V1) zu dem unteren Volumen (V2) durch die Scheidewand (15) mit daraus folgendem Abschalten des Reaktors bewirkt.

7. Reaktor nach einem oder mehreren der Ansprüche 2 bis 6, wobei das Schutzsystem (13A) so konfiguriert ist, dass eine Temperaturerhöhung des Primärfluids des Reaktors und die daraus folgende Druckbeaufschlagung des innerhalb des Volumens (V1) enthaltenen Gases, in Bezug auf das untere Volumen (V2), das einen durch das Servicevolumen (V4) begrenzten Druck aufweist, einen oder mehrere Siphons (25, 26) aktiviert, mit daraus folgender Verdrängung vom Betriebsfluid (F) aus dem oberen Volumen (V1) in das untere Volumen (V2) durch die Scheidewand (15) und mit daraus folgender Abschaltung des Reaktors.

8. Reaktor nach Anspruch 7, wobei das untere Volumen (V2) mit einer Leitung (18) kommuniziert, die mit einem Serviceventil (21) versehen ist, durch das Gas in das untere Volumen (V2) eingespeist werden kann, um das Schutzsystem (13A) nach einem Eingriff wieder zu aktivieren, indem es bewirkt wird, dass das Betriebsfluid (F) durch den Siphon oder die Siphons (25, 26) vom unteren Volumen (V2) zum oberen Volumen (V1) steigt.

9. Reaktor nach einem oder mehreren der vorhergehenden Ansprüche, wobei die Scheidewand (15) mindestens einen kollabierbaren Abschnitt (27) umfasst, der bei einer vorgegebenen Temperatur schmilzt; und wobei das Schmelzen des kollabierbaren Abschnitts (27) den Transfer des Betriebsfluids (F) vom oberen Volumen (V1) zum unteren Volumen (V2) mit daraus folgendem Abschalten des Reaktors bewirkt.

10. Reaktor nach einem oder mehreren der Ansprüche 6 bis 9, wobei sich in einem oberen Teil des oberen Volumens (V1) ein elastisch verformbarer Körper (38) befindet, der das obere Volumen (V1) in ein inneres Volumen (33) innerhalb des Körpers (38) und ein äußeres Volumen (34) außerhalb des Körpers (38) unterteilt; wobei das innere Volumen (33) geschlossen und unten durch einen Boden (36) begrenzt ist und über eine Verbindungsleitung (35) mit einem unteren Abschnitt (31) des oberen Volumens (V1) kommuniziert; wobei der Körper (38) innerhalb des äußeren Volumens (34) enthalten ist, das mit dem Primärfluid (10) über Löcher (39) kommuniziert, die in dem Gehäuse (14) entlang der gesamten vertikalen Höhe des äußeren Volumens (34) ausgebildet sind; und wobei eine Druckerhöhung in dem äußeren Volumen (34) im Anschluss an eine Druckerhöhung des Primärfluids ein Kollabieren des Körpers (38) mit einer daraus folgenden Reduzierung des inneren Volumens (33) und einer Aktivierung des Siphons oder der Siphons (25, 26) bewirkt.

11. Reaktor nach einem oder mehreren der Ansprüche 6 bis 9, wobei sich im oberen Teil des oberen Volumens (V1) ein elastisch verformbarer Körper (38) befindet, der das obere Volumen (V1) in ein inneres Volumen (33) innerhalb des Körpers (38) und ein äußeres Volumen (34) außerhalb des Körpers (38) unterteilt; wobei das innere Volumen (33) geschlossen und unten durch einen Boden (36) begrenzt ist und über eine Verbindungsleitung (35) mit einem unteren Teil (31) des oberen Volumens (V1) kommuniziert; wobei der Körper (38) im Inneren des äußeren Volumens (34) enthalten ist, das Gas enthält, das wiederum über Öffnungen (40), die im oberen Teil des Gehäuses (14) oberhalb des Pegels des Primärfluids positioniert sind, mit dem Deckgas (12) des Reaktors (1) kommuniziert; und wobei die Öffnungen (40) so konfiguriert sind, dass eine zufällige Wellenbewegung des Primärfluids, beispielsweise aufgrund eines Erdbebens, ein Überlaufen des Primärfluids innerhalb des äußeren Volumens (34) und ein daraus folgendes Kollabieren des Körpers (38) durch die Wirkung des Auftriebs des Primärfluids mit daraus folgender Betätigung des Siphons oder der Siphons (25, 26) bewirkt.

12. Reaktor nach Anspruch 10 oder 11, wobei die Reduzierung des inneren Volumens (33) nach einer Druckerhöhung des Primärfluids (10) und dem Kollabieren des Körpers (38) dazu beiträgt, den Drucktransienten des gesamten Primärsystems des Reaktors zu reduzieren.

13. Reaktor nach einem oder mehreren der Ansprüche 6 bis 12, **dadurch gekennzeichnet, dass** durch Öffnen eines Verbindungsventils (22) zwischen zwei Leitungen (16, 18), die mit dem oberen Volumen (V1) bzw. dem unteren Volumen (V2) kommunizieren, die Pegel (H2, H3) des Betriebsfluids (F) außerhalb und innerhalb des Siphons oder der Siphons (25, 26) wiederhergestellt werden können.

14. Reaktor nach einem oder mehreren der vorhergehenden Ansprüche, wobei das neutronenreflektierende Betriebsfluid (F) dasselbe Primärfluid (10) des Reaktors ist, mit dem der untere Teil (24) des dem Kern zugewandten oberen Volumens (V1) über in dem Gehäuse (14) ausgebildete Löcher (39) kommuniziert.

15. Reaktor nach Anspruch 14, wobei das untere Volumen (V2) ein Primärfluid (10) enthält, mit dem das untere Volumen (V2) über weitere in dem Gehäuse (14) ausgebildete Löcher (39) kommuniziert, sowie ein erstes neutronenabsorbierendes Material (28), das sich im Falle einer Temperaturerhöhung, die einen voreingestellten Schwellenwert übersteigt, und eines daraus folgenden Schmelzens des kollabierbaren Abschnitts (27), der oberhalb dieses Schwellenwerts schmilzt, der Scheidewand (15) durch Schwimmen innerhalb des unteren Teils (24) bewegt, um den Reaktor abzuschalten.

16. Reaktor nach Anspruch 1, wobei das obere Volumen (V1) ein geschlossenes Volumen ist und das untere Volumen (V2) ein Primärfluid (10) enthält, mit dem das untere Volumen (V2) über in dem Gehäuse (14) ausgebildete Löcher (39) kommuniziert, sowie ein erstes neutronenabsorbierendes Material (28); wobei die Scheidewand (15) mindestens einen kollabierbaren Abschnitt (27) umfasst, der oberhalb eines vorgegebenen Druckschwellenwerts bricht, so dass im Falle einer Druckerhöhung oberhalb des Druckschwellenwerts und des Bruchs des kollabierbaren Abschnitts (27) der Scheidewand (15) ein Transfer von Primärfluid (10) in das Innere des unteren Teils (24) stattfindet, um die Druckerhöhung des Primärsystems des Reaktors zu reduzieren.

## Revendications

1. Réacteur nucléaire (1) doté d'un système de protection (13A) pour l'arrêt du réacteur dans des conditions accidentelles, le système de protection (13A) comprenant un ou plusieurs dispositifs d'arrêt (13B) disposés latéralement et radialement à l'extérieur par rapport au cœur (4) du réacteur (1) ; le dispositif d'arrêt (13B) comportant un carter (14), par exemple sensiblement cylindrique, positionné latéralement par rapport au cœur (4) et faisant au moins partiellement face au cœur (4), le carter (14) comportant un septum (15) qui délimite à l'intérieur du carter (14) un volume supérieur (V1) et un volume inférieur (V2) séparés par le septum (15), le volume supérieur (V1) contenant un fluide de fonctionnement réfléchissant les neutrons (F), en particulier un métal liquide, devant la partie active (5) du cœur (4) et le volume inférieur (V2) contenant un milieu transparent aux neutrons ou absorbant les neutrons ; dans lequel le dispositif d'arrêt (13B) comprend au moins un dispositif d'exclusion (43) configuré de manière à exclure la fonction de séparation du septum (15) pour remplacer, au moins en partie, le fluide de fonctionnement réfléchissant les neutrons (F) par le milieu transparent aux neutrons ou absorbant les neutrons à l'intérieur du carter (14) devant la partie active (5) du cœur (4).

2. Réacteur selon la revendication 1, dans lequel le volume supérieur (V1) comprend une partie inférieure (24) orientée vers la partie active (5) du cœur (4) et qui est reliée hydrauliquement au volume inférieur (V2) par au moins un siphon (25, 26) traversant le septum (15), de préférence au moins un siphon (25) avec un diamètre supérieur et un siphon (26) avec un diamètre inférieur, et de telle sorte qu'une augmentation de la pression du fluide de fonctionnement (F) dans le volume supérieur (V1) entraîne une élévation du niveau du fluide de fonctionnement (F) à l'intérieur du ou des siphons (25, 26) jusqu'à un ou plusieurs niveaux de débordement (H4, H5) pour activer les siphons respectifs et amener le fluide de fonctionnement (F) de la partie inférieure (24), orientée vers le cœur, du volume supérieur (V1) vers le volume inférieur (V2) éloigné du cœur, de manière à augmenter la fuite de neutrons et à provoquer l'arrêt du réacteur.

3. Réacteur selon la revendication 2, dans lequel le volume inférieur (V2) est relié hydrauliquement à un volume de service (V4) à l'extérieur du cœur de manière à limiter l'augmentation de pression dans le volume inférieur (V2) lors du remplissage avec le fluide de fonctionnement (F).

4. Réacteur selon la revendication 2 ou 3, dans lequel un premier matériau absorbant les neutrons (28) ayant une densité inférieure à celle du fluide de fonctionnement (F), constitué par exemple de billes de carbure de bore, flotte dans le volume supérieur (V1) au-dessus du fluide de fonctionnement (F) de manière à rapprocher ledit premier matériau absorbant les neutrons du cœur lorsque le niveau (H2) du fluide de fonctionnement (F) dans le volume supérieur (V1) s'abaisse.

5. Réacteur selon l'une ou plusieurs des revendications 2 à 4, dans lequel un second matériau absorbant les neutrons (29) est positionné à l'intérieur du volume supérieur (V1) au même niveau que le fluide de fonctionnement (F) et face au fluide de fonctionnement (F) et dans une zone radialement la plus extérieure par rapport au cœur, de sorte qu'un abaissement du niveau du fluide de fonctionnement (F) dans le volume supérieur (V1) amplifie la fonction dudit second matériau absorbant les neutrons (29) en raison de l'absence de fluide réfléchissant les neutrons interposé par rapport au cœur.

6. Réacteur selon l'une ou plusieurs des revendications 2 à 5, dans lequel le volume supérieur (V1) est relié hydrauliquement à un volume haute pression (V3), contenant un gaz à une pression supérieure à celle du volume supérieur (V1), par un conduit (16) doté d'une vanne d'entrée de gaz (17) ; et dans lequel l'ouverture de la vanne d'entrée de gaz (17) relie le volume haute pression (V3) au volume supérieur (V1) de manière à provoquer la pressurisation du volume supérieur (V1) et l'actionnement des siphons provoquant le transfert du fluide de fonctionnement (F) du volume supérieur (V1) au volume inférieur (V2) à travers le septum (15), avec pour conséquence l'arrêt du réacteur.

7. Réacteur selon l'une ou plusieurs des revendications 2 à 6, dans lequel le système de protection (13A) est configuré pour qu'une augmentation de la température du fluide primaire du réacteur et la pressurisation conséquente du gaz contenu dans le volume (V1), par rapport au volume inférieur (V2) dont la pressurisation est limitée par le volume de service (V4), active un ou plusieurs siphons (25, 26) avec pour conséquence le déplacement du fluide de fonctionnement (F) du volume supérieur (V1) vers le volume inférieur (V2) à travers le septum (15) avec pour conséquence l'arrêt du réacteur.

8. Réacteur selon la revendication 7, dans lequel le volume inférieur (V2) communique avec un conduit (18) doté d'une vanne de service (21) par laquelle du gaz peut être introduit dans le volume inférieur (V2) pour réarmer le système de protection (13A) après une intervention en faisant monter le fluide de fonctionnement (F) du volume inférieur (V2) au volume supérieur (V1) par le ou les siphons (25, 26).

9. Réacteur selon l'une ou plusieurs des revendications précédentes, dans lequel le septum (15) comprend au moins une partie pliable (27) qui fusionne à une température prédéfinie ; et dans lequel la fusion de ladite partie pliable (27) entraîne le transfert du fluide de fonctionnement (F) du volume supérieur (V1) au volume inférieur (V2), avec pour conséquence l'arrêt du réacteur.

10. Réacteur selon l'une ou plusieurs des revendications 6 à 9, dans lequel dans une partie supérieure du volume supérieur (V1) se trouve un corps élastique déformable (38), qui divise le volume supérieur (V1) en un volume intérieur (33) à l'intérieur dudit corps (38) et un volume extérieur (34) à l'extérieur dudit corps (38) ; le volume intérieur (33) étant fermé et délimité en dessous par un fond (36) et communiquant, via un conduit de connexion (35), avec une partie inférieure (31) du volume supérieur (V1) ; ledit corps (38) étant contenu dans le volume extérieur (34) qui est en communication avec le fluide primaire (10) par des trous (39) formés dans le carter (14) sur toute la hauteur verticale du volume extérieur (34) ; et dans lequel une augmentation de pression dans le volume extérieur (34), suite à une augmentation de pression du fluide primaire, provoque l'effondrement du corps (38) avec une réduction conséquente du volume intérieur (33) et l'activation du ou des siphons (25, 26).

11. Réacteur selon l'une ou plusieurs des revendications 6 à 9, dans lequel dans la partie supérieure du volume supérieur (V1) se trouve un corps élastique déformable (38), qui divise le volume supérieur (V1) en un volume intérieur (33) à l'intérieur dudit corps (38) et un volume extérieur (34) à l'extérieur dudit corps (38) ; le volume intérieur (33) étant fermé et délimité en dessous par un fond (36) et communiquant, via un conduit de connexion (35), avec une partie inférieure (31) du volume supérieur (V1) ; ledit corps (38) étant contenu dans le volume extérieur (34) qui contient du gaz, communiquant à son tour avec le gaz de couverture (12) du réacteur (1) via des ouvertures (40) positionnées dans la partie supérieure du carter (14) au-dessus du niveau du fluide primaire ; et dans lequel les ouvertures (40) sont configurées de manière à ce qu'un mouvement ondulatoire accidentel du fluide primaire, dû par exemple à un tremblement de terre, provoque un débordement du fluide primaire à l'intérieur du volume extérieur (34) et l'effondrement consécutif du corps (38) par l'effet de flottabilité du fluide primaire, avec l'actionnement consécutif du ou des siphons (25, 26).

12. Réacteur selon la revendication 10 ou 11, dans lequel la réduction du volume intérieur (33) suite à une augmentation de la pression du fluide primaire (10) et à l'effondrement du corps (38) contribue à réduire le transitoire de pression de l'ensemble du système primaire du réacteur.

13. Réacteur selon une ou plusieurs des revendications 6 à 12, dans lequel l'ouverture d'une vanne de raccordement (22) entre deux conduits (16, 18) communiquant respectivement avec le volume supérieur (V1) et le volume inférieur (V2) permet de rétablir les niveaux (H2, H3) du fluide de fonctionnement (F) à l'extérieur et à l'intérieur du ou des siphons (25, 26) respectivement.

14. Réacteur selon l'une ou plusieurs des revendications précédentes, dans lequel le fluide de fonctionnement réfléchissant les neutrons (F) est le même fluide primaire (10) du réacteur, avec lequel la partie inférieure (24) du volume supérieur (V1) faisant face au cœur communique par des trous (39) formés dans le carter (14).

15. Réacteur selon la revendication 14, dans lequel le volume inférieur (V2) contient le fluide primaire (10), avec lequel le volume inférieur (V2) communique par d'autres trous (39) formés dans le carter (14), ainsi qu'un premier matériau absorbant les neutrons (28) qui, en cas d'augmentation de la température dépassant un seuil prédéfini et de fusion consécutive de la partie pliable (27), qui fusionne au-dessus dudit seuil, du septum (15), se déplace en flottant à l'intérieur de la partie inférieure (24) afin d'arrêter le réacteur.

16. Réacteur selon la revendication 1, dans lequel le volume supérieur (V1) est un volume fermé et le volume inférieur (V2) contient le fluide primaire (10) avec lequel le volume inférieur (V2) communique par des trous (39) formés dans le carter (14) ainsi qu'un premier matériau absorbant les neutrons (28) ; le septum (15) comprenant au moins une partie pliable (27) qui se rompt au-dessus d'un seuil de pression prédéfini, de sorte qu'en cas d'augmentation de la pression au-dessus dudit seuil de pression et de rupture de la partie pliable (27) du septum (15), il y a un transfert de fluide primaire (10) à l'intérieur de la partie inférieure (24) pour réduire l'augmentation de la pression du système primaire du réacteur.
